# EUROPEAN PATENT APPLICATION

(11) **EP 4 646 002 A1**
(43) Date of publication of application: **05.11.2025**
(21) Application number: 22969542.4
(22) Date of filing: 27.12.2022
(51) Int. Cl.: H04W 74/00

(54) **INFORMATION TRANSMISSION METHOD AND APPARATUS, AND STORAGE MEDIUM**

(71) Applicant: Beijing Xiaomi Mobile Software Co., Ltd., Beijing 100085 (CN)
(72) Inventor: LIU, Xiaofei, Beijing 100085 (CN)
(74) Representative: Gunzelmann, Rainer
(86) International application number: PCT/CN2022/142516
(87) International publication number: WO 2024/138386

(57) **Abstract**

Provided in the present disclosure are an information transmission method and apparatus, and a storage medium. The method comprises: in response to a network slice triggering random access (RA), reporting information related to a network slice AS group (NSAG) to a network device. By means of the present disclosure, a network device can be allowed to optimize, in a timely and accurate manner, RA resource configuration information corresponding to an NSAG, such that the reliability of an RA process triggered by the network slice is improved, and the availability is high.

## Description

### TECHNICAL FIELD

The present disclosure relates to the field of communication technologies, and in particular to an information transmission method and apparatus, and a storage medium.

### BACKGROUND

In Release 17 (R17), in order to realize early identification of R17 features by a network device, so that the network device may subsequently provide corresponding reasonable configuration, specific random access (RA) partitions are configured for multiple features or feature combinations, the terminal initiates a random access based on a specific RA partition resource, and the network device may early identify the feature or feature combination by identifying the RA partition resource selected by the terminal.

However, due to limitation of the RA resources and actual network deployment, the network device may not provide specific RA partitions for all feature combinations. That is, there are some feature combinations that cannot find corresponding RA partitions. In this case, a Media Access Control (MAC) layer of the terminal performs RA partition selection based on feature priorities configured by the network device, giving priority to ensuring that high-priority features may find corresponding RA partitions. That is, the RA partition finally selected by the terminal may not support all features or feature combinations applicable to this RA, and the RA configuration needs to be optimized.

### SUMMARY

**In** order to overcome the problems existing in the related art, embodiments of the present disclosure provide an information transmission method and apparatus, and a storage medium.

According to a first aspect of the embodiments of the present disclosure, there is provided an information transmission method. The method is performed by a terminal, and includes:
reporting related information of a network slice AS group (NSAG) to a network device in response to a random access (RA) triggered by a network slice.

Optionally, the NSAG includes at least one of:
all NSAGs associated with single-network slice selection assistance information (S-NSSAI) triggering the RA; or
an NSAG associated with S-NSSAI triggering the RA and meeting a specified condition.

Optionally, the specified condition for the NSAG associated with the S-NSSAI triggering the RA and meeting the specified condition includes at least one of:
the NSAG being included in a system message; or
the NSAG having a highest NSAG priority.

Optionally, the related information of the NSAG includes at least one of:
S-NSSAI associated with the NSAG;
identity information of the NSAG;
priority information of the NSAG; or
area identity information corresponding to the NSAG, the area identity information including tracking area identity (TAI) information.

Optionally, the method further includes:
recording the related information of the NSAG.

Optionally, recording the related information of the NSAG includes at least one of:
recording the related information of the NSAG in response to triggering a specified record;
recording the related information of the NSAG in response to a random access failure; or
recording the related information of the NSAG in response to receiving recording instruction information sent by the network device.

Optionally, triggering the specified record includes at least one of:
triggering a radio link failure (RLF) record;
triggering an RA record; or
triggering a handover success record.

Optionally, recording the related information of the NSAG includes:
recording the related information of the NSAG in a specified report variable.

Optionally, reporting the related information of the NSAG triggering the RA to the network device includes at least one of:
reporting availability indication information to the network device, in which the availability indication information is used to indicate that the terminal has the related information of the NSAG; or
reporting content in the specified report variable to the network device.

Optionally, the availability indication information includes at least one of:
RLF availability indication information;
successful handover report (SHR) availability indication information;
RA availability indication information; or
Newly-defined slice information availability indication information.

Optionally, the specified report variable includes at least one of:
an RLF report variable;
an SHR variable;
an RA report variable; or
a slice report variable used to record slice information.

Optionally, the method further includes:
receiving reporting request information sent by the network device, in which the reporting request information is used to request the terminal to report the related information of the NSAG to the network device;
Reporting of the related information of the network slice group NSAG triggering the RA to the network device includes:
   reporting the related information of the NSAG to the network device based on the reporting request information.

Optionally, the method further includes:
reporting capability indication information to the network device, in which the capability indication information is used to indicate that the terminal has a capability to report the related information of the NSAG.

Optionally, the RA includes at least one of:
a two-step RA; or
a four-step RA.

Optionally, the RA at least includes a contention-based random access (CBRA).

According to a second aspect of the embodiments of the present disclosure, there is provided an information transmission method. The method is performed by a network device, and includes:
receiving related information of an NSAG reported by a terminal; and
optimizing RA resource configuration information corresponding to the NSAG based on the related information of the NSAG.

Optionally, the NSAG includes at least one of:
all NSAGs associated with S-NSSAI triggering the RA; or
an NSAG associated with S-NSSAI triggering the RA and meeting a specified condition.

Optionally, the specified condition for the NSAG associated with the S-NSSAI triggering the RA and meeting the specified condition includes at least one of:
the NSAG being included in a system message; or
the NSAG having a highest NSAG priority.

Optionally, the related information of the NSAG includes at least one of:
S-NSSAI associated with the NSAG;
identity information of the NSAG;
priority information of the NSAG; or
area identity information corresponding to the NSAG, the area identity information includes TAI information.

Optionally, the method further includes:
sending recording instruction information to the terminal, in which the recording instruction information is used to instruct the terminal to record the related information of the NSAG.

Optionally, receiving the related information of the NSAG reported by the terminal includes at least one of:
receiving availability indication information reported by the terminal, in which the availability indication information is used to indicate that the terminal has the related information of the NSAG; or
receiving a specified report variable reported by the terminal, in which the related information of the NSAG is recorded in the specified report variable.

Optionally, the availability indication information includes at least one of:
RLF availability indication information;
SHR availability indication information;
RA availability indication information; or
newly-defined slice information availability indication information.

Optionally, the specified report variable includes at least one of:
an RLF report variable;
an SHR variable;
an RA report variable; or
a slice report variable used to record slice information.

Optionally, the method further includes:
sending reporting request information to the terminal, in which the reporting request message is used to request the terminal to report the related information of the NSAG to the network device.

Optionally, the method further includes:
receiving capability indication information reported by the terminal, in which the capability indication information is used to indicate that the terminal has a capability to report the related information of the NSAG.

Optionally, the RA includes at least one of:
a two-step RA; or
a four-step RA.

Optionally, the RA at least includes a CBRA.

According to a third aspect of the embodiments of the present disclosure, there is provided an information transmission apparatus. The apparatus is applied to a terminal and includes:
a reporting module, configured to report related information of an NSAG to a network device in response to an RA triggered by a network slice.

According to a fourth aspect of the embodiments of the present disclosure, there is provided an information transmission apparatus. The apparatus is applied to a base station and includes:
a receiving module, configured to receive related information of an NSAG reported by a terminal; and
an optimization module, configured to optimize RA resource configuration information corresponding to the NSAG based on the related information of the NSAG.

According to a fifth aspect of the embodiments of the present disclosure, a computer-readable storage medium is provided. The storage medium stores a computer program, and the computer program is used to execute any one of the above-mentioned information transmission methods described for the terminal.

According to a sixth aspect of the embodiments of the present disclosure, a computer-readable storage medium is provided. The storage medium stores a computer program, and the computer program is used to execute any one of the above-mentioned information transmission methods described for the network device.

According to a seventh aspect of the embodiments of the present disclosure, there is provided an information transmission apparatus. The apparatus includes:
a processor; and
a memory for storing instructions executable by the processor;
the processor is configured to execute any one of the information transmission methods described above for the terminal.

According to an eighth aspect of the embodiments of the present disclosure, there is provided an information transmission apparatus. The apparatus includes:
a processor; and
a memory for storing instructions executable by the processor;
the processor is configured to execute any one of the information transmission methods described above for the network device.

The technical solutions provided by the embodiments of the present disclosure may have the following beneficial effects:

In the embodiments of the present disclosure, the terminal can report the related information of the NSAG to the network device in response to the RA triggered by the network slice, so that the network device optimizes the RA resource configuration information corresponding to the NSAG based on the related information of the NSAG. The present disclosure enables the network device to timely and accurately optimize the RA resource configuration information corresponding to the NSAG, which improves the reliability of the RA process triggered by the network slice, and has high availability.

It is to be understood that the foregoing general description and the following detailed description are exemplary and explanatory only and are not restrictive of the present disclosure.

### BRIEF DESCRIPTION OF THE DRAWINGS

The accompanying drawings are incorporated in and constitute a part of the specification, illustrate embodiments consistent with the present disclosure, and together with the description, serve to explain the principles of the present disclosure.
FIG. 1 is a schematic flow chart of an information transmission method according to an example embodiment.
FIG. 2 is a schematic flow chart of another information transmission method according to an example embodiment.
FIG. 3 is a schematic flow chart of another information transmission method according to an example embodiment.
FIG. 4 is a schematic flow chart of another information transmission method according to an example embodiment.
FIG. 5 is a schematic diagram showing an information transmission system architecture according to an example embodiment.
FIG. 6 is a schematic flow chart of another information transmission method according to an example embodiment.
FIG. 7 is a block diagram of an information transmission apparatus according to an example embodiment.
FIG. 8 is a block diagram of another information transmission apparatus according to an example embodiment.
FIG. 9 is a structure schematic diagram of an information transmission apparatus according to an example embodiment of the present disclosure.
FIG. 10 is a structure schematic diagram of another information transmission apparatus according to an example embodiment of the present disclosure.

### DETAILED DESCRIPTION

Example embodiments will be described in detail herein, examples of which are shown in the accompanying drawings. When the following description refers to the drawings, the same numbers in different drawings represent the same or similar elements unless otherwise indicated. The embodiments described in the following example embodiments do not represent all embodiments consistent with the present disclosure. Instead, they are merely examples of devices and methods consistent with some aspects of the present disclosure as detailed in the appended claims.

The terms used in the present disclosure are for the purpose of describing specific embodiments only and are not intended to limit the present disclosure. The singular forms of "a", "an", "said" and "the" used in the present disclosure and the appended claims are also intended to include plural forms unless the context clearly indicates otherwise. It should also be understood that the term "and/or" used herein refers to and includes any or all possible combinations of at least one associated listed item.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the word "if" as used herein may be interpreted as "in a case that", "when", or "in response to determining that".

In the present disclosure, an R17 feature includes but is not limited to at least one of: Small Data Transmission (SDT); Reduced Capability (redcap); Radio Access Network slicing (RAN slicing); or Coverage Enhancement (CE).

A terminal initiates a random access based on a specific RA partition resource so that a network device may realize early identification of features or feature combinations by identifying an RA partition resource selected by the terminal, which specifically includes: the terminal first determines a features or a feature combination triggering this RA, and determines whether there is an available RA resource corresponding to the feature or feature combination triggering the RA based on an RA partition configuration provided by a base station. If there is no available RA resource, a legacy RA resource (that is, an RA resource that is not associated with any feature indication) is selected; if there is one, the RA resource is selected; if there are multiple RA resources, resource selection is performed based on feature priorities configured by the network.

In R17, in order to avoid security and signaling load issues caused by broadcasting single-network slice selection assistance information (S-NSSAI) in a broadcast signaling, a network slice AS group (NSAG) mechanism is introduced.

For network devices, the base station provides a supported NSAG and a corresponding RA configuration of the NSAG to the terminal for slice-based cell reselection and RA configuration enhancement. At the same time, a core network device sends NSAG information and the S-NSSAI to the terminal through a non-access stratum (NAS) signaling, so that the terminal may map a required S-NSSAI to the NSAG and perform cell reselection and RA procedure based on the NSAG configuration.

For the terminal, the terminal receives the S-NSSAI (S) and the NSAG information sent by the core network device through the NAS signaling. An NAS layer of the terminal transmits to an Access Stratum (AS) one or more pieces of slice and slice grouping information, which is used by the AS layer to determine an NSAG identity for cell selection and reselection.

In a slice-based RA procedure, a Radio Resource Control (RRC) layer determines an NSAG identity that is associated with S-NSSAI triggering the RA, has a highest NSAG priority, and is broadcast in a System Information Block 1 (SIB1), according to the S-NSSAI triggering the RA, a mapping relationship between the S-NSSAI and the NSAG, and an NSAG priority provided by a higher layer.

For example, multiple S-NSSAIs triggering the RA include S-NSSAI#1, S-NSSAI#2, and S-NSSAI#3, which are respectively associated with NSAG#1, NSAG#2, NSAG#3, and NSAG#4. RA configurations corresponding to NSAG#2 and NSAG#4 are broadcast in SIB1. The NSAG priorities from high to low are: NSAG#4, NSAG#2, NSAG#3, and NSAG#1. Therefore, the RRC layer determines to select NSAG#4 and provides it to the MAC layer, which further performs the RA resource selection based on the feature priority.

Therefore, for the slice-based RA, the final resource selection result depends on the selection of NSAG and the feature priority. Further, the selection of NSAG depends on the NSAG priority and whether the corresponding RA configuration is configured in SIB1.

In order to solve the above technical problems, the present disclosure provides a following information transmission method and apparatus, and a storage medium, which can enable the network device to timely and accurately optimize the RA resource configuration information corresponding to the NSAG, which improves the reliability of the RA procedure triggered by the network slice, and has high availability.

The following first introduces the information transmission method provided by the present disclosure for a terminal.

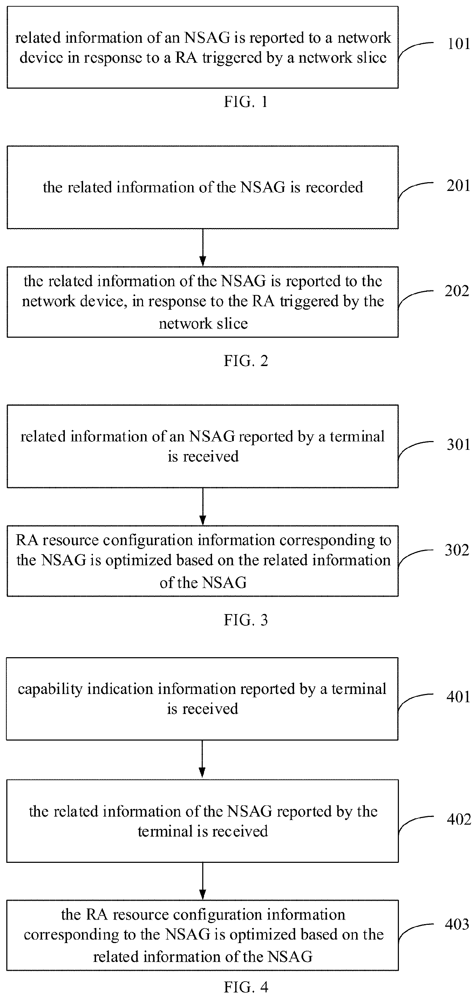

The present disclosure provides an information transmission method, as shown in FIG. 1, which is a flow chart of an information transmission method according to an embodiment. The method can be performed by a terminal, and may include following steps.

In step 101, related information of an NSAG is reported to a network device in response to a RA triggered by a network slice.

In the embodiment of the present disclosure, the NSAG includes but is not limited to at least one of: all NSAGs associated with S-NSSAI triggering the RA; or an NSAG associated with S-NSSAI triggering the RA and meeting a specified condition.

In a possible implementation, the NSAG includes the NSAG associated with the S-NSSAI triggering the RA and meeting the specified condition, in which the specified condition includes but is not limited to at least one of: the NSAG being included in a system message, or the NSAG having a highest NSAG priority.

The NSAG being included in the system message may be an NSAG broadcasted through the system message, such as an SIB1. Optionally, RA configuration information corresponding to the NSAG may be broadcasted in the SIB1.

In an example, the terminal reports the related information of all the NSAGs associated with the S-NSSAI triggering the RA.

In another example, the terminal reports the related information of the NSAG associated with the S-NSSAI triggering the RA and meeting the specified condition.

Exemplarily, the terminal reports the related information of the NSAG associated with the S-NSSAI triggering the RA and being included in the system message. For example, the terminal reports the related information of the NSAG that is associated with the S-NSSAI triggering the RA and broadcasted in the SIB1.

Exemplarily, the terminal reports the related information of the NSAG associated with the S-NSSAI triggering the RA and being not included in the system message. For example, the terminal reports the related information of the NSAG that is associated with the S-NSSAI triggering RA and is not broadcast in the SIB1.

Exemplarily, the terminal reports the related information of the NSAG that is associated with the S-NSSAI triggering the RA and has the highest NSAG priority.

Optionally, if there are multiple NSAGs with the highest NSAG priority, the terminal may report related information of the multiple NSAGs, or may report related information of one of the NSAGs. Exemplarily, the NSAG reported by the terminal may be an NSAG provided to a MAC layer of the terminal to perform RA resource selection. It should be noted that one NSAG among multiple NSAGs with the highest NSAG priority may be determined by a protocol agreement, a network indication, or terminal self-selection, which is not limited in the present disclosure. The multiple refers to two or more.

Exemplarily, the terminal reports the related information of an NSAG that is associated with the S-NSSAI triggering the RA and is other than the NSAG with the highest NSAG priority, in which the NSAG other than the NSAG with the highest NSAG priority refers to an NSAG with a non-highest NSAG priority.

Exemplarily, the terminal reports the related information of an NSAG that is associated with the S-NSSAI triggering the RA, is included in the system message and has the highest NSAG priority.

If there are multiple NSAGs with the highest NSAG priority, the terminal may report the related information of the multiple NSAGs that are associated with the S-NSSAI triggering the RA, are included in the system message and have the highest NSAG priority, or report the related information of one NSAG among the multiple NSAGs that is associated with the S-NSSAI triggering the RA, is included in the system message and has the highest NSAG priority. Exemplarily, the NSAG reported by the terminal may be the NSAG provided to the MAC layer of the terminal to perform the RA resource selection. It should be noted that one NSAG among the multiple NSAGs with the highest NSAG priority may be determined by a protocol agreement, or a network indication, or terminal self-selection, which is not limited in the present disclosure. The multiple refers to two or more.

Exemplarily, the terminal reports the related information of an NSAG that is associated with the S-NSSAI triggering the RA, is not included in the system message and has the highest NSAG priority.

If there are multiple NSAGs with the highest NSAG priority, the terminal may report the related information of the multiple NSAGs that are associated with the S-NSSAI triggering the RA, are not included in the system message, and have the highest NSAG priority, or report the related information of one of the NSAGs that is associated with the S-NSSAI triggering the RA, is not included in the system message, and has the highest NSAG priority. Exemplarily, the NSAG reported by the terminal may be the NSAG provided to the MAC layer of the terminal to perform the RA resource selection. It should be noted that one of the multiple NSAGs with the highest NSAG priority may be determined by a protocol agreement, or a network indication, or terminal self-selection, which is not limited in the present disclosure. The multiple refers to two or more.

Exemplarily, the terminal reports the related information of an NSAG that is associated with the S-NSSAI triggering the RA, is included in the system message, and is other than the NSAG with the highest NSAG priority. The NSAG other than the NSAG with the highest NSAG priority refers to an NSAG with non-highest NSAG priority.

Exemplarily, the terminal reports the related information of an NSAG that is associated with the S-NSSAI triggering the RA, is not included in the system message, and is other than the NSAG with the highest NSAG priority. The NSAG other than the NSAG with the highest NSAG priority refers to an NSAG with non-highest NSAG priority.

In another example, the terminal reports the related information of all NSAGs associated with the S-NSSAI triggering the RA, and the related information of the NSAG associated with the S-NSSAI triggering the RA and meeting the specified condition.

Exemplarily, the terminal reports the related information of all NSAGs associated with the S-NSSAI triggering the RA, and indicates whether each reported NSAG is included in the system message, for example, whether it is broadcast through the SIB1.

Exemplarily, the terminal reports the related information of all NSAGs associated with the S-NSSAI triggering the RA, and indicates whether each reported NSAG has the highest NSAG priority.

Exemplarily, the terminal reports the related information of all NSAGs associated with the S-NSSAI triggering the RA, and indicates whether each reported NSAG is an NSAG with the highest NSAG priority broadcast in the system message.

The above is merely the exemplary description, and all schemes of the related information of the one or more NSAGs reported by the terminal should fall within the protection scope of the present disclosure.

In a possible implementation, the related information of the NSAG reported by the terminal may include, but is not limited to, at least one of: S-NSSAI associated with the NSAG; identity information of the NSAG; priority information of the NSAG; and area identity information corresponding to the NSAG.

The area identity information includes but is not limited to tracking area identity (TAI) information.

Exemplarily, the NSAG includes all NSAGs associated with the S-NSSAI triggering the RA. Accordingly, the related information of NSAG reported by the terminal may include but is not limited to: the S-NSSAI triggering the RA; identity information of all NSAGs associated with the S-NSSAI triggering the RA; priority information of all NSAGs associated with the S-NSSAI triggering the RA; or area identity information corresponding to all NSAGs associated with the S-NSSAI triggering the RA, such as the TAI information.

Exemplarily, the NSAG includes the NSAG associated with the S-NSSAI triggering the RA and meeting the specified condition, and the specified conditions includes the NSAG being included in the system message, then the related information of the NSAG reported by the terminal may include but is not limited to: the S-NSSAI triggering the RA; identity information of the NSAG that is associated with the S-NSSAI triggering the RA and is included in the system message; priority information of the NSAG that is associated with the S-NSSAI triggering the RA and is included in the system message; or area identity information corresponding to the NSAG that is associated with the S-NSSAI triggering the RA and is included in the system message, such as the TAI information.

The above is merely the exemplary description. In practical applications, all solutions in which the terminal reports the related information corresponding to the NSAG should fall within the protection scope of the present disclosure.

In the above embodiments, the terminal may report the related information of the NSAG to the network device in response to the RA triggered by the network slice, so that the network device optimizes the RA resource configuration information corresponding to the NSAG based on the related information of the NSAG. The reliability of the RA procedure triggered by the network slice is improved, and the availability is high.

The above-mentioned reporting procedure is described below with examples.

For example, the multiple S-NSSAIs that trigger the RA include S-NSSAI#1, S-NSSAI#2, and S-NSSAI#3, which are associated with NSAG#1, NSAG#2, NSAG#3, and NSAG#4, respectively. The SIB1 broadcasts the RA configurations corresponding to NSAG#2 and NSAG#4, and the NSAG priorities from high to low are: NSAG#4, NSAG#2, NSAG#3, and NSAG#1.

In one case, the terminal reports the related information of the NSAG associated with the S-NSSAI triggering the RA and included in the system message. Accordingly, the terminal reports the related information of NSAG#2 and NSAG#4, for example, reports the S-NSSAI associated with NSAG#2 and NSAG#4, the identity information of NSAG#2 and the identity information of NSAG#4, the priority information of NSAG#2 and the priority information of NSAG#4, and the area identity information corresponding to NSAG#2 and NSAG#4, such as the TAI, etc.

In another case, the terminal reports the related information of the NSAG associated with the S-NSSAI triggering the RA and not included in the system message. Accordingly, the terminal reports the related information of NSAG#1 and NSAG#3.

In another case, the terminal reports the related information of the NSAG that is associated with the S-NSSAI triggering the RA, is included in the system message, and has the highest NSAG priority. Accordingly, the terminal reports the related information of NSAG#4, for example, reports the S-NSSAI associated with NSAG#4, the identity information of NSAG#4, the priority information of NSAG#4, and the area identity information corresponding to NSAG#4, such as the TAI, etc.

In another case, the terminal reports the related information of the NSAG that is associated with the S-NSSAI triggering the RA, is included in the system message, and is other than the NSAG with the highest NSAG priority. Accordingly, the terminal reports NSAG#2, for example, reports the S-NSSAI associated with NSAG#2, the identity information of NSAG#2, the priority information of NSAG#2, and the area identity information corresponding to NSAG#2, such as the TAI, etc.

In another case, the terminal reports the related information of all NSAGs associated with the S-NSSAI triggering the RA, and indicates whether each reported NSAG is included in the system message. Accordingly, the terminal reports the related information of NSAG#1, NSAG#2, NSAG#3, and NSAG#4, and indicates that NSAG#2 and NSAG#4 are included in the system message, and/or indicates that NSAG#1 and NSAG#3 are not included in the system message.

In another case, the terminal reports the related information of all NSAGs associated with the S-NSSAI triggering the RA, and indicates whether each reported NSAG has the highest NSAG priority. Accordingly, the terminal reports the related information of NSAG#1, NSAG#2, NSAG#3, and NSAG#4, and indicates that NSAG#4 has the highest NSAG priority, and/or indicates that NSAG#1, NSAG#2, and NSAG#3 do not have the highest NSAG priority.

In another case, the terminal reports the related information of all NSAGs associated with the S-NSSAI triggering the RA, and indicates whether each reported NSAG is the NSAG with the highest NSAG priority broadcast in the system message. Accordingly, the terminal reports the related information of NSAG#1, NSAG#2, NSAG#3, and NSAG#4, and indicates that NSAG#1 is not included in the system message and does not have the highest NSAG priority; NSAG#2 is included in the system message and does not have the highest NSAG priority; NSAG#3 is not included in the system message and does not have the highest NSAG priority; NSAG#4 is included in the system message and has the highest NSAG priority.

In some optional embodiments, referring to FIG. 2, FIG. 2 is a flow chart of an information transmission method according to an embodiment, the method can be performed by a terminal. The method may include following steps.

In step 201, the related information of the NSAG is recorded.

In the embodiment of the present disclosure, the terminal records the related information of the NSAG when a trigger condition is met.

In a possible implementation, the terminal records the related information of the NSAG in response to triggering a specified record.

In an example, triggering the specified record may be triggering a radio link failure (RLF) record. Accordingly, in response to triggering the RLF record, the terminal records the related information of the NSAG.

In an example, triggering the specified record may be triggering an RA record. Accordingly, in response to triggering the RA record, the terminal records the related information of the NSAG.

In an example, triggering the specified record may be triggering a handover success record. Accordingly, in response to triggering the handover success record, the terminal records the related information of the NSAG.

In another possible implementation, in response to a random access failure, the related information of the NSAG is recorded.

In another possible implementation, the terminal records the related information of the NSAG in response to receiving recording instruction information sent by the network device, in which the recording instruction information is used to instruct the terminal to record the related information of the NSAG.

In another possible implementation, in response to triggering the specified record and the random access failure, the terminal records the related information of the NSAG.

In another possible implementation, in response to triggering the specified recording and receiving the recording instruction information sent by the network device, the terminal records the related information of the NSAG.

In another possible implementation, in response to triggering the specified recording, the random access failure, and receiving the recording instruction information sent by the network device, the terminal records the related information of the NSAG.

The above is merely the exemplary description. In practical applications, other situations or combinations of situations that trigger the terminal to record the related information of the NSAG should all fall within the scope of protection of the present disclosure.

In a possible implementation, the NSAG includes at least one of: all NSAGs associated with S-NSSAI triggering the RA; or an NSAG associated with S-NSSAI triggering the RA and meeting a specified condition.

The NSAG includes an NSAG that is associated with the S-NSSAI triggering the RA and meets the specified condition, in which the specified condition includes at least one of: the NSAG being included in the system message; the NSAG having the highest NSAG priority.

If there are multiple NSAGs with the highest NSAG priority, the terminal may report the related information of the multiple NSAGs, or report the related information of one of the NSAGs. Exemplarily, the NSAG reported by the terminal may be the NSAG provided to the MAC layer of the terminal to perform the RA resource selection. It should be noted that one of the multiple NSAGs with the highest NSAG priority may be determined by a protocol agreement, a network indication or a terminal self-selection, which is not limited in the present disclosure.

In a possible implementation, the related information of the NSAG includes at least one of: S-NSSAI associated with the NSAG, identity information of the NSAG, priority information of the NSAG, or area identity information corresponding to the NSAG, the area identity information including TAI information.

The method for determining the NSAG and the related information of the NSAG to be recorded is similar to the method for determining the NSAG and the related information of the NSAG to be reported in step 101, and will not be described in detail here.

In a possible implementation, when recording the related information of the NSAG, the terminal may record the related information of the NSAG in a specified report variable.

The specified report variable includes but is not limited to at least one of: an RLF report variable; a successful handover report (SHR) variable; an RA report variable; or a slice report variable used to record slice information.

Exemplarily, in response to triggering the RLF record, the terminal may record the related information of the NSAG in the RLF report variable.

Exemplarily, in response to triggering the RA record, the terminal may record the related information of the NSAG in the RA report variable. Specifically, the terminal may configure a RA-purpose variable in the RA report variable as the related information of the NSAG, such as setting it as an S-NSSAI or NSAG identity.

Exemplarily, in response to triggering the handover success record, the terminal may record the related information of the NSAG in the SHR variable.

Exemplarily, in response to the random access failure, the terminal may record the related information of the NSAG in a report variable.

Exemplarily, in response to receiving the recording instruction information sent by the network device, the terminal may record the related information of the NSAG in the slice report variable.

The above is only the exemplary description, and all solutions for the terminal to record the related information of the NSAG should fall within the protection scope of the present disclosure.

In step 202, the related information of the NSAG is reported to the network device, in response to the RA triggered by the network slice.

In the embodiment of the present disclosure, the terminal may report the previously recorded related information of the NSAG to the network device.

In a possible implementation, the terminal reports availability indication information to the network device. The availability indication information is used to indicate that the terminal has the related information of the NSAG.

In an embodiment of the present disclosure, the availability indication information may include but is not limited to at least one of:
availability indication information already existed in a protocol, such as RLF availability indication information, SHR availability indication information, and RA availability indication information; or
slice information availability indication information that is newly defined by a protocol agreement.

Exemplarily, when a bit value of a bit corresponding to the availability indication information is set to a predefined bit value, such as "1" or "0", it is used to indicate that the terminal has the related information of NSAG.

Exemplarily, the terminal reports the RLF availability indication information to indicate that the terminal has available RLF related information and the related information of the NSAG.

Exemplarily, the terminal reports the SHR availability indication information to indicate that the terminal has available SHR related information and the related information of the NSAG.

Exemplarily, the terminal reports the RA availability indication information to indicate that the terminal has available RA related information and the related information of the NSAG.

Exemplarily, the terminal reports newly-defined slice information availability indication information to indicate that the terminal has the related information of the NSAG.

Exemplarily, the terminal reports the RLF availability indication information and the newly-defined slice information availability indication information, to indicate that the terminal has the available RLF related information and the related information of the NSAG.

Exemplarily, the terminal reports the SHR availability indication information and the newly-defined slice information availability indication information, to indicate that the terminal has the available SHR related information and the related information of the NSAG.

Exemplarily, the terminal reports the RA availability indication information and the newly-defined slice information availability indication information, to indicate that the terminal has the available RA related information and the related information of the NSAG.

In an embodiment of the present disclosure, the availability indication information may also include an availability indication bit newly defined by the protocol agreement. Exemplarily, the terminal adds the availability indication bit to the information reported to the network device. The information may be information already existed in the protocol or only include newly defined information of the availability indication bit. When the availability indication bit is set to a predefined bit value, such as "1" or "0", it is used to indicate that the terminal has the related information of the NSAG.

Exemplarily, the terminal reports the RLF availability indication information, the availability indication bit is added to the RLF availability indication information. When the availability indication bit indicates that the terminal has the related information of the NSAG, it is indicated that the terminal has the available RLF related information and the related information of the NSAG.

Exemplarily, the terminal reports the RLF availability indication information and newly defined information including the availability indication bit. When the availability indication bit indicates that the terminal has the related information of NSAG, it is indicated that the terminal has the available RLF related information and the related information of the NSAG.

Exemplarily, the terminal reports the SHR availability indication information, and the availability indication bit is added to the SHR availability indication information. When the availability indication bit indicates that the terminal has the related information of the NSAG, it is indicated that the terminal has the available SHR related information and the related information of the NSAG.

Exemplarily, the terminal reports the SHR availability indication information and the newly defined information including the availability indication bit. When the availability indication bit indicates that the terminal has the related information of the NSAG, it is indicated that the terminal has the available SHR related information and the related information of the NSAG.

Exemplarily, the terminal reports the RA availability indication information, and the availability indication bit is added to the RA availability indication information. When the availability indication bit indicates that the terminal has the related information of the NSAG, it is indicated that the terminal has the available RA related information and the related information of the NSAG.

Exemplarily, the terminal reports the RA availability indication information and the newly defined information including the availability indication bit. When the availability indication bit indicates that the terminal has the related information of NSAG, it is indicated that the terminal has the available RA related information and the related information of the NSAG.

The above is merely an exemplary description. The terminal reports the availability indication information, the availability indication information reuses the existing availability indication information of the protocol, or the slice information availability indication information newly defined by the protocol agreement (or the newly-defined availability indication bit) should all fall within the scope of protection of the present disclosure.

In another possible implementation, the terminal records the related information of the NSAG in a specified report variable, and the terminal reports content in the specified report variable to the network device.

In the embodiment of the present disclosure, the procedure in which the terminal reports the content in the specified report variable to the network device may reuse the existing reporting procedure of the specified report variable in the protocol, or may be a new reporting procedure stipulated by the protocol. For example, the terminal receives reporting request information sent by the network device, and the reporting request message is used to request the terminal to report the related information of the NSAG to the network device. Further, the terminal reports the related information of the NSAG to the network device based on the reporting request information.

In another possible implementation, the terminal first reports the availability indication information to the network device. The availability indication information is used to indicate that the terminal has the related information of the NSAG. Furthermore, the terminal reports the content in the specified report variable to the network device.

The availability indication information may include but is not limited to at least one of: the existing availability indication information in the protocol, such as the RLF availability indication information, the SHR availability indication information, and the RA availability indication information; the slice information availability indication information newly defined by the protocol agreement (or the newly-defined availability indication bit). The way in which the network device determines that the terminal has the related information of the NSAG based on the availability indication information is similar to the way in which the network device determines that the terminal has the related information of NSAG based on the availability indication information in the above-mentioned embodiments, and will not be repeated here.

In another possible implementation, the terminal receives the reporting request information sent by the network device, the reporting request information being used to request the terminal to report the related information of the NSAG to the network device. Furthermore, the terminal reports the related information of the NSAG to the network device based on the reporting request information.

In another possible implementation, the terminal first reports the availability indication information to the network device. The availability indication information is used to indicate that the terminal has the related information of the NSAG. Further, the network device sends the reporting request information to the terminal based on the availability indication information, the reporting request information being used to request the terminal to report the related information of the NSAG to the network device, and the terminal reports the related information of the NSAG to the network device based on the reporting request information.

The availability indication information may include but is not limited to at least one of: the existing availability indication information in the protocol, such as the RLF availability indication information, the SHR availability indication information, and the RA availability indication information; the slice information availability indication information newly defined by the protocol agreement (or the newly-defined availability indication bit). The way in which the network device determines that the terminal has the related information of the NSAG based on the availability indication information is similar to the way in which the network device determines that the terminal has the related information of NSAG based on the availability indication information in the above-mentioned embodiments, and will not be repeated here.

In the above embodiments, the terminal can record the related information of the NSAG and then report it to the network device, so that the network device can optimize the RA resource configuration information corresponding to the NSAG based on the related information of the NSAG. The present disclosure can enable the network device to timely and accurately optimize the RA resource configuration information corresponding to the NSAG, which improves the reliability of the RA procedure triggered by the network slice, and has high availability.

In some optional embodiments, the terminal may report capability indication information to the network device, in which the capability indication information is used to indicate that the terminal has a capability to report the related information of the NSAG.

In the present disclosure, a timing for the terminal to report the capability indication information is not limited.

In a possible implementation, the terminal may report the capability indication information to the network device before reporting the related information of the NSAG to the network device, i.e., before performing the above step 101.

In another possible implementation, the terminal may report the capability indication information to the network device before or after recording the related information of the NSAG, i.e., before or after performing the above step 201.

For example, after establishing an RRC connection with the network device, the terminal immediately reports the capability indication information to the network device.

For another example, in response to triggering the specified record, the terminal reports the capability indication information to the network device before recording the related information of the NSAG into the specified report variable.

For another example, after recording the related information of the NSAG into the specified report variable and before reporting the content of the specified report variable to the network device, the terminal reports the capability indication information to the network device.

In another possible implementation, the terminal may report the capability indication information to the network device after reporting the related information of the NSAG to the network device, i.e., after performing the above step 101 or 202.

The above description is merely the exemplary description, and the present disclosure does not limit the timing for the terminal to report the related information of the NSAG to the network device.

In the above embodiments, the terminal can report the capability indication information to the network device, informing the network device that the terminal has the capability to report the related information of the NSAG, which is simple to be achieved and has high availability.

In some optional embodiments, the RA in the present disclosure includes at least one of: two-step RA; or four-step RA.

The four-step RA means that the terminal first sends message 1 (msg1) to the network device. The msg1 is used to transmit a preamble code. The network device returns msg2 to the terminal based on msg1. The msg2 is a random access response message. Based on uplink time-frequency domain resource information provided by the uplink grant in the msg2, the terminal sends msg3 to the base station to request to establish a connection with the network device. The base station returns msg4 to establish an RRC connection with the terminal.

The two-step RA means that the terminal combines msg1 and msg3 into msgA and sends it to the network device, and the network device combines msg2 and msg4 into msgB and returns it to the terminal.

In some optional embodiments, the RA in the present disclosure at least includes Contention Based Random Access (CBRA).

The information transmission method provided by the present disclosure will be introduced below from the perspective of a network device.

Referring to FIG. 3, FIG. 3 is a flow chart of an information transmission method according to an embodiment, which can be performed by a network device. The network device may include but is not limited to a base station, an access network device, etc. The base station may be a 4G base station, a 5G base station or a future 6G base station. The access network device may be a 4G access network device, a 5G access network device or a future 6G access network device, etc. Optionally, the network device may also include a core network device, etc. The method may include the following steps.

In step 301, related information of an NSAG reported by a terminal is received.

In an embodiment of the present disclosure, the NSAG includes but is not limited to at least one of: all NSAGs associated with S-NSSAI triggering the RA, or an NSAG associated with S-NSSAI triggering the RA and meet a specified condition.

In a possible implementation, the specified condition includes but is not limited to at least one of: the NSAG being included in a system message, or the NSAG having the highest NSAG priority.

The NSAG being included in the system message may be an NSAG broadcasted through the system message, such as SIB1. Optionally, RA configuration information corresponding to the NSAG may be broadcasted in the SIB1.

If there are multiple NSAGs with the highest NSAG priority, the terminal may report the related information of multiple NSAGs, or report the related information of one NSAG among multiple NSAGs with the highest NSAG priority. For example, the NSAG reported by the terminal may be an NSAG provided to a MAC layer of the terminal to perform RA resource selection. It should be noted that one NSAG among multiple NSAGs with the highest NSAG priority may be determined by a protocol agreement, a network indication, or terminal self-selection, which is not limited in the present disclosure.

In a possible implementation, the related information of the NSAG reported by the terminal may include but is not limited to at least one of: S-NSSAI associated with the NSAG; identity information of the NSAG; priority information of the NSAG; or area identity information corresponding to the NSAG.

The area identity information includes but is not limited to TAI information.

In a possible implementation, the terminal does not need to record the related information of the NSAG, and may directly report the related information of the NSAG to the network device.

A procedure of the terminal reporting the related information of the NSAG is similar to step 101 and will not be described again here.

In another possible implementation, the terminal records the related information of the NSAG and then reports it to the network device.

Optionally, the network device may send recording instruction information to the terminal, in which the recording instruction information is used to instruct the terminal to record the related information of the NSAG. The terminal performs recording based on the recording instruction information.

In a possible implementation, the network device may receive availability indication information reported by the terminal, in which the availability indication information is used to indicate that the related information of the NSAG is available on the terminal.

In the embodiment of the present disclosure, the availability indication information may include but is not limited to at least one of:
availability indication information already existed in a protocol, such as RLF availability indication information, SHR availability indication information, and RA availability indication information; or
slice information availability indication information newly-defined by a protocol agreement.

Exemplarily, when the availability indication information is set to a predefined bit value, such as "1" or "0", it is indicated that the terminal has the related information of the NSAG.

Exemplarily, when the network device receives the RLF availability indication information, it determines that the terminal has available RLF related information and the related information of the NSAG.

Exemplarily, when the network device receives the SHR availability indication information, it determines that the terminal has available SHR related information and the related information of the NSAG.

Exemplarily, when the network device receives the RA availability indication information, it determines that the terminal has available RA related information and the related information of the NSAG.

Exemplarily, the network device receives the newly-defined slice information availability indication information and determines that the terminal has the related information of the NSAG.

Exemplarily, when the network device receives the RLF availability indication information and the newly-defined slice information availability indication information, it determines that the terminal has the available RLF related information and the related information of the NSAG.

Exemplarily, when the network device receives the SHR availability indication information and the newly-defined slice information availability indication information, it determines that the terminal has the available SHR related information and the related information of the NSAG.

Exemplarily, when the network device receives the RA availability indication information and the newly-defined slice information availability indication information, it determines that the terminal has the available RA related information and the related information of the NSAG.

In an embodiment of the present disclosure, the availability indication information may also include an availability indication bit newly defined by the protocol agreement. Exemplarily, the terminal adds the availability indication bit to the information reported to the network device. The information may be information already existed in the protocol or only include newly defined information of the availability indication bit. When the availability indication bit is set to a predefined bit value, such as "1" or "0", it is used to indicate that the terminal has the related information of the NSAG.

Exemplarily, when the network device receives the RLF availability indication information, in which the availability indication bit is added and the availability indication bit indicates that the terminal has the related information of the NSAG, the network device determines that the terminal has the available RLF related information and the related information of the NSAG.

Exemplarily, when the network device receives the RLF availability indication information and newly defined information including the availability indication bit, in which the availability indication bit indicates that the terminal has the related information of the NSAG, the network device determines that the terminal has the available RLF related information and the related information of the NSAG.

Exemplarily, when the network device receives the SHR availability indication information, in which the availability indication bit is added to the SHR availability indication information and the availability indication bit indicates that the terminal has the related information of the NSAG, the network device determines that the terminal has the available SHR related information and the related information of the NSAG.

Exemplarily, when the network device receives the SHR availability indication information and the newly defined information including the availability indication bit, in which the availability indication bit indicates that the terminal has the related information of the NSAG, the network device determines that the terminal has the available SHR related information and the related information of the NSAG.

Exemplarily, when the network device receives the RA availability indication information, in which the availability indication bit is added to the RA availability indication information and the availability indication bit indicates that the terminal has the related information of the NSAG, the network device determines that the terminal has the available RA related information and the related information of the NSAG.

Exemplarily, when the network device receives the RA availability indication information and the newly defined information including the availability indication bit, in which the availability indication bit indicates that the terminal has the related information of the NSAG, the network device determines that the terminal has the available RA related information and the related information of the NSAG.

The above is merely the exemplary description. The terminal reports the availability indication information, the availability indication information reuses the existing availability indication information of the protocol, or the slice information availability indication information newly defined by the protocol agreement (or the newly-defined availability indication bit) should all fall within the scope of protection of the present disclosure.

In another possible implementation, the network device may receive a specified report variable reported by the terminal, and the related information of the NSAG is recorded in the specified report variable.

In another possible implementation, the network device may receive availability indication information reported by the terminal, in which the availability indication information is used to indicate that the terminal has the related information of the NSAG. Furthermore, the network device receives the specified report variable reported by the terminal, in which the related information of the NSAG is recorded in the specified report variable.

The availability indication information may include but is not limited to at least one of: the existing availability indication information in the protocol, such as the RLF availability indication information, the SHR availability indication information, and the RA availability indication information; the slice information availability indication information newly defined by the protocol agreement (or the newly-defined availability indication bit). The way in which the network device determines that the terminal has the related information of the NSAG based on the availability indication information is similar to the way in which the network device determines that the terminal has the related information of NSAG based on the availability indication information in the above-mentioned embodiments, and will not be repeated here.

In another possible implementation, the network device may receive availability indication information reported by the terminal, and the availability indication information is used to indicate that the terminal has the related information of the NSAG. The network device sends the reporting request message to the terminal based on the availability indication information, and the reporting request information is used to request the terminal to report the related information of the NSAG to the network device. Furthermore, the network device receives the specified report variable reported by the terminal based on the reporting request message, and the related information of the NSAG is recorded in the specified report variable.

The availability indication information may include but is not limited to at least one of: the existing availability indication information in the protocol, such as the RLF availability indication information, the SHR availability indication information, and the RA availability indication information; the slice information availability indication information newly defined by the protocol agreement (or the newly-defined availability indication bit). The way in which the network device determines that the terminal has the related information of the NSAG based on the availability indication information is similar to the way in which the network device determines that the terminal has the related information of NSAG based on the availability indication information in the above-mentioned embodiments, and will not be repeated here.

The specified report variable includes at least one of: an RLF report variable; an SHR variable; an RA report variable; or a slice report variable used to record slice information.

In step 302, RA resource configuration information corresponding to the NSAG is optimized based on the related information of the NSAG.

In a possible implementation, when optimizing the RA resource configuration information corresponding to the NSAG, the network device may allocate more RA resources to the NSAG accessed by more terminals.

In another possible implementation, when optimizing the RA resource configuration information corresponding to the NSAG, the network device may allocate more RA resources to the NSAG that is accessed by more terminals and has the highest NSAG priority.

If there are multiple NSAGs with the highest NSAG priority, the terminal reports the related information of the multiple NSAGs, and may also report the related information of one of the NSAGs. Exemplarily, the NSAG reported by the terminal may be an NSAG provided to the MAC layer of the terminal to perform the RA resource selection. It should be noted that one of the NSAGs with the highest NSAG priority may be determined by a protocol agreement, a network indication, or terminal self-selection, which is not limited in the present disclosure.

In another possible implementation, when optimizing the RA resource configuration information corresponding to the NSAG, the network device may allocate more RA resources to the NSAG that is accessed by more terminals, has the highest NSAG priority, and has the highest quality of service (QoS) level for a corresponding terminal service.

If there are multiple NSAGs with the highest NSAG priority, the terminal reports the related information of the multiple NSAGs, and may also report the related information of one of the NSAGs. Exemplarily, the NSAG reported by the terminal may be an NSAG provided to the MAC layer of the terminal to perform the RA resource selection. It should be noted that one of the NSAGs with the highest NSAG priority may be determined by a protocol agreement, a network indication, or terminal self-selection, which is not limited in the present disclosure.

In the embodiments of the present disclosure, the network device can timely optimize the RA resource configuration information corresponding to the NSAG based on the related information of the NSAG reported by the terminal, and according to the network load, network resource occupancy, etc. The optimization strategy, including but not limited to the above strategies, can be determined by the network device, and the specific optimization scheme is not limited in the present disclosure.

In the above embodiments, the network device timely and accurately optimizes the RA resource configuration information corresponding to the NSAG based on the related information of the NSAG reported by the terminal, thereby improving the reliability of the RA procedure triggered by the network slice and achieving high availability.

In some optional embodiments, referring to FIG. 4, FIG. 4 is a flow chart of an information transmission method according to an embodiment, which can be performed by a network device. The method may include the following steps.

In step 401, capability indication information reported by a terminal is received.

The capability indication information is used to indicate that the terminal has the capability to report the related information of the NSAG.

In step 402, the related information of the NSAG reported by the terminal is received.

The implementation of step 402 is similar to that of step 301 and will not be described in detail here.

In an embodiment of the present disclosure, the network device may first receive the capability indication information reported by the terminal, determine that the terminal has the capability to report the related information of the NSAG, and then receives the related information of the NSAG reported by the terminal.

Of course, the network device may first receive the related information of the NSAG reported by the terminal, and then receive the capability indication information reported by the terminal to determine that the terminal has the capability to report the related information of the NSAG. This is not limited in the preset disclosure.

In step 403, the RA resource configuration information corresponding to the NSAG is optimized based on the related information of the NSAG.

The implementation of step 403 is similar to that of step 302 and will not be described in detail here.

In the above embodiment, the network device can determine that the terminal has the capability to report the related information of the NSAG based on the capability indication information reported by the terminal, so that the related information of the NSAG reported by the terminal can be received in a timely and accurate manner, which is simple to be achieved and has high availability.

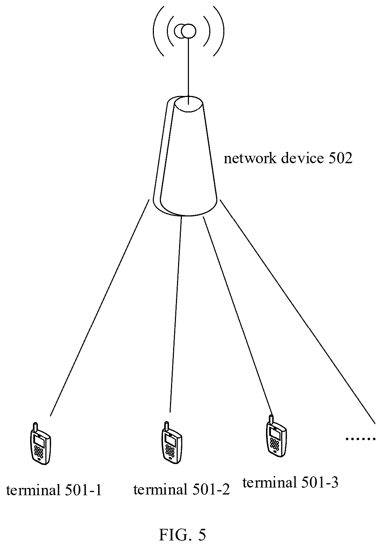

In some optional embodiments, as shown in FIG. 5, FIG. 5 is a schematic diagram of a network architecture applicable to the solutions of the present disclosure. The network in the present disclosure may be a 4G network, a 5G network, a 6G network or a future communication network, etc., which is not limited in the present disclosure. The network architecture includes:

terminal 501 (including 501-1, 501-2, 501-3, ... in FIG. 5), which may be a smart phone, a desktop computer, a laptop computer, a iPad, etc., which is not limited in the present disclosure; and

a network device 502, which includes but is not limited to a base station, an access network device, etc., in which the base station may be a 4G base station, a 5G base station, or a future 6G base station, and the access network device may be a 4G access network device, a 5G access network device, or a future 6G access network device, etc., which is not limited in the present disclosure. Optionally, the network device 502 may also include a core network device, etc.

In some embodiments, the terminal 501 reports related information of NSAG to the network device 502 in response to an RA triggered by a network slice.

In some other embodiments, the network device 502 optimizes RA resource configuration information corresponding to the NSAG based on the related information of the NSAG.

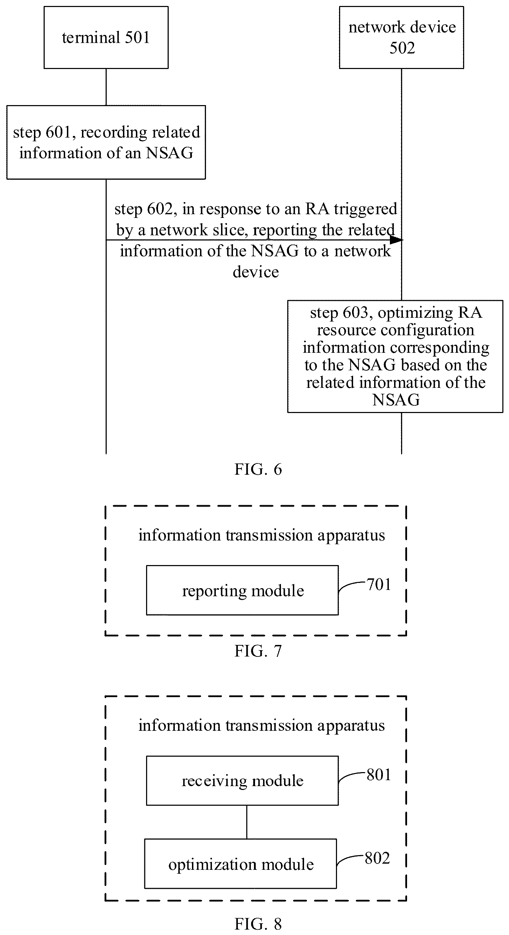

In some optional embodiments, based on the system architecture shown in FIG. 5, the present disclosure further provides a flow chart of an information transmission method, as shown in FIG. 6. The method may include the following steps.

In step 601, a terminal records related information of an NSAG.

The implementation of step 601 is similar to that of step 201 above, and will not be repeated here.

In step 602, in response to an RA triggered by a network slice, the terminal reports the related information of the NSAG to a network device.

The implementation of step 602 is similar to the above-mentioned step 101 or 202, and will not be repeated here.

In step 603, the network device optimizes RA resource configuration information corresponding to the NSAG based on the related information of the NSAG.

The implementation of step 603 is similar to that of step 302 above, and will not be described in detail here.

In the above embodiments, in response to the RA triggered by the network slice, the terminal can report the related information of the NSAG to the network device, and the network device optimizes the RA resource configuration information corresponding to the NSAG based on the related information of the NSAG reported by the terminal. The present disclosure enables the network device to timely and accurately optimize the RA resource configuration information corresponding to the NSAG, which improves the reliability of the RA process triggered by the network slice, and has high availability.

To facilitate understanding of the solutions of the present disclosure, the above method is further illustrated from the terminal side as follows.

First, in response to the RA triggered by the network slice, the terminal reports the related information of the NSAG to the network device.

Based on the above description, the NSAG may be all NSAGs and/or a specific NSAG associated with S-NSSAI triggering the RA.

Based on the above description, the specific NSAG may be an NSAG that meets a specified condition, including but not limited to at least one of:
(a) an NSAG associated with the S-NSSAI triggering the RA and broadcasted in SIB1;
(b) an NSAG associated with the S-NSSAI triggering the RA and not broadcast in SIB1;
   as a possible implementation based on (a) and (b), the terminal may report the related information of all NSAGs associated with the S-NSSAI triggering the RA, and may indicate whether they are broadcast in SIB1.
(c) an NSAG that is associated with the S-NSSAI triggering the RA, is broadcast in the SIB1, and has the highest NSAG priority.

Furthermore, if there are multiple NSAGs with the highest NSAG priority, the terminal may record and report all of them, or may record and report only one of them. The reported one of the NSAGs is the NSAG provided to a MAC layer of the terminal for performing resource selection.

One of the NSAGs with the highest NSAG priority may be determined by a protocol agreement, a network instruction, or terminal self-selection, which is not limited in the present disclosure.
(d) an NSAG that is associated with the S-NSSAI triggering the RA, is broadcast in the SIB1, and is other than the NSAG with the highest NSAG priority;

As a possible implementation based on a) and b), the terminal reports the related information of all NSAGs associated with the S-NSSAI triggering the RA, and indicates whether they have the highest priority NSAG and are broadcast in the SIB1.

As another possible implementation, the terminal records the NSAG associated with the S-NSSAI triggering the RA and broadcast in SIB1, and indicates whether it is the NSAG with the highest priority broadcast in SIB1.

Based on the above description, the related information of the NSAG includes but is not limited to at least one of: S-NSSAI associated with the NSAG, identity information of the NSAG, priority information of the NSAG, and area identity information corresponding to the NSAG. The area identity information includes TAI information.

Based on the above description, the terminal may record the related information of the NSAG, which includes recording the related information into a specified report variable when at least one of following situations occurs:
triggering an RLF record or an RA record or a handover success record;
a random access failure; or
receiving recording instruction information sent by the network device, in which the recording instruction information is used to instruct the terminal to record the related information of the NSAG.

Furthermore, the recording instruction information may be used to instruct the terminal to record the related information of the above-mentioned specific NSAG.

The specified report variable may be an existing report variable in the protocol, such as an RLF report variable, an SHR variable, an RA report variable, etc., or it may be a newly-defined slice report variable.

As a possible implementation, an RA-purpose variable in the RA report variable may be set to the S-NSSAI or NSAG identity.

The above-mentioned situations for triggering the execution of recording may occur individually or in combination, for example, the terminal receives the recording instruction information sent by the network device and the random access failure occurs.

Based on the above description, the related information reported by the terminal to NSAG includes at least one of:
reporting availability indication information, in which the availability indication information is used to indicate that the terminal has the related information of the NSAG; or
reporting content in the specified report variable to the network device.

The availability indication information may reuse existing RLF availability indication information, SHR availability indication information, RA availability indication information, or it may be slice information availability indication information newly defined by a protocol agreement (or newly-defined availability indication bit), to indicate that the terminal has the related information of the NSAG.

Reporting the content in the specified report variable to the network device may reuse the existing reporting procedure, or may be a new reporting procedure defined by the protocol. For example, in response to receiving the reporting request message sent by the network device, the terminal reports the related information of the NSAG to the network device.

The solutions of the terminal reporting the availability indication information and informing the network device that the terminal has the related information of the NSAG is similar to the solutions in the above step 202, which will not be repeated here. Based on the above description, the RA includes two-step RA and/or four-step RA, and at least includes a CBRA.

Based on the above description, optionally, the terminal reports capability indication information, where the capability indication information is used to indicate that the terminal has a capability to report the related information of the NSAG.

In the above embodiments, the terminal can report the related information of the NSAG to the network device in response to the RA triggered by the network slice, so that the network device optimizes the RA resource configuration information corresponding to the NSAG based on the related information of the NSAG. The present disclosure enables the network device to timely and accurately optimize the RA resource configuration information corresponding to the NSAG, which improves the reliability of the RA procedure triggered by the network slice, and has high availability.

Corresponding to the aforementioned application function implementation method embodiments, the present disclosure also provides application function implementation apparatus embodiments.

Referring to FIG. 7, FIG. 7 is a block diagram of an information transmission apparatus according to an example embodiment. The apparatus is applied to a terminal and includes:
a reporting module 701, configured to report related information of an NSAG to a network device in response to an RA triggered by a network slice.

Referring to FIG. 8, FIG. 8 is a block diagram of an information transmission apparatus according to an example embodiment. The apparatus is applied to a network device and includes:
a receiving module 801, configured to receive related information of an NSAG reported by a terminal;
an optimization module 802, configured to optimize RA resource configuration information corresponding to the NSAG based on the related information of the NSAG.

For the apparatus embodiments, since they basically correspond to the method embodiments, the relevant parts may refer to the partial description of the method embodiments. The apparatus embodiments described above are only schematic, in which the units described above as separate components may or may not be physically separated, and the components displayed as units may or may not be physical units, that is, they may be located in one place, or they may be distributed on multiple network units. Some or all of the modules may be selected according to actual requirements to achieve the purposes of the solutions of the present disclosure. A person of ordinary skill in the art may understand and implement them without creative work.

Correspondingly, the present disclosure also provides a computer-readable storage medium. The storage medium stores a computer program, and the computer program is used to execute any of the above-mentioned information transmission methods for the terminal.

Correspondingly, the present disclosure also provides a computer-readable storage medium. The storage medium stores a computer program, and the computer program is used to execute any of the above-mentioned information transmission methods for the network device.

Correspondingly, the present disclosure also provides an information transmission apparatus, including:
a processor; and
a memory for storing instructions executable by the processor;
in which the processor is configured to perform any of the information transmission methods described above for the terminal.

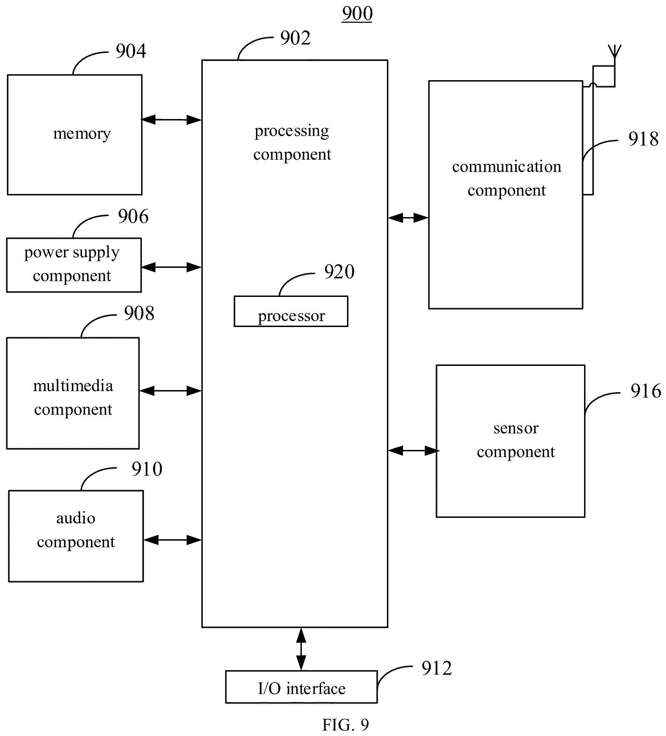

Fig. 9 is a block diagram of an information transmission apparatus 900 according to an example embodiment. For example, the apparatus 900 may be a terminal such as a mobile phone, a tablet computer, an e-book reader, a multimedia player, a wearable device, a vehicle-mounted user device, an iPad, a smart TV, etc.

Referring to FIG. 9, the apparatus 900 may include one or more of the following components: a processing component 902, a memory 904, a power supply component 906, a multimedia component 908, an audio component 910, an input/output (I/O) interface 912, a sensor component 916, and a communication component 918.

The processing component 902 generally controls the overall operation of the apparatus 900, such as operations associated with display, phone calls, random access to data, camera operations, and recording operations. The processing component 902 may include one or more processors 920 to execute instructions to complete all or part of the steps of the above-mentioned information transmission methods. In addition, the processing component 902 may include one or more modules to facilitate the interaction between the processing component 902 and other components. For example, the processing component 902 may include a multimedia module to facilitate the interaction between the multimedia component 908 and the processing component 902. For another example, the processing component 902 may read executable instructions from the memory to implement the steps of an information transmission methods provided in the above-mentioned embodiments.

The memory 904 is configured to store various types of data to support operations on the apparatus 900. Examples of such data include instructions for any application or method operating on the apparatus 900, contact data, phone book data, messages, pictures, videos, etc. The memory 904 may be implemented by any type of volatile or non-volatile storage device or a combination thereof, such as a static random access memory (SRAM), an electrically erasable programmable a read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 provides power to the various components of the apparatus 900. The power supply component 906 may include a power management system, one or more power supplies, and other components associated with generating, managing, and distributing power for the apparatus 900.

The multimedia component 908 includes a display screen that provides an output interface between the apparatus 900 and the user. In some embodiments, the multimedia component 908 includes a front camera and/or a rear camera. When the apparatus 900 is in an operating mode, such as a shooting mode or a video mode, the front camera and/or the rear camera may receive external multimedia data. Each front camera and rear camera may be a fixed optical lens system or may have a focal length and optical zoom capability.

The audio component 910 is configured to output and/or input audio signals. For example, the audio component 910 includes a microphone (MIC), and when the apparatus 900 is in an operating mode, such as a call mode, a recording mode, and a speech recognition mode, the microphone is configured to receive an external audio signal. The received audio signal may be further stored in the memory 904 or sent via the communication component 918. In some embodiments, the audio component 910 also includes a speaker for outputting audio signals.

The I/O interface 912 provides an interface between processing component 902 and peripheral interface modules, such as keyboards, click wheels, buttons, etc. These buttons may include but are not limited to: a home button, a volume button, a start button, and a lock button.

The sensor component 916 includes one or more sensors for providing various aspects of status assessment for the apparatus 900. For example, the sensor component 916 may detect the open/closed state of the apparatus 900, the relative positioning of components, such as the display and keypad of the apparatus 900, and the sensor component 916 may also detect the position change of the apparatus 900 or a component of the apparatus 900, the presence or absence of user contact with the apparatus 900, the orientation or acceleration/deceleration of the apparatus 900, and the temperature change of the apparatus 900. The sensor component 916 may include a proximity sensor configured to detect the presence of nearby objects without any physical contact. The sensor component 916 may also include an optical sensor, such as a CMOS or CCD image sensor, for use in imaging applications. In some embodiments, the sensor component 916 may also include an accelerometer, a gyroscope sensor, a magnetic sensor, a pressure sensor, or a temperature sensor.

The communication component 918 is configured to facilitate wired or wireless communication between the apparatus 900 and other devices. The apparatus 900 may access a wireless network based on a communication standard, such as Wi-Fi, 2G, 3G, 4G, 5G or 6G, or a combination thereof. In an example embodiment, the communication component 918 receives a broadcast signal or broadcast-related information from an external broadcast management system via a broadcast channel. In an example embodiment, the communication component 918 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the apparatus 900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to execute any of the information transmission methods described above for the terminal.

In an example embodiment, there is also provided a non-transitory machine-readable storage medium including instructions, such as a memory 904 including instructions, and the instructions may be executed by a processor 920 of the apparatus 900 to complete the above-mentioned information transmission methods. For example, the non-transitory computer-readable storage medium may be a ROM, a random access memory (RAM), a CD-ROM, a magnetic tape, a floppy disk, an optical data storage device, etc.

Correspondingly, the present disclosure also provides an information transmission apparatus, including:
a processor; and
a memory for storing instructions executable by the processor;
in which the processor is configured to execute any of the information transmission methods described above for the network device.

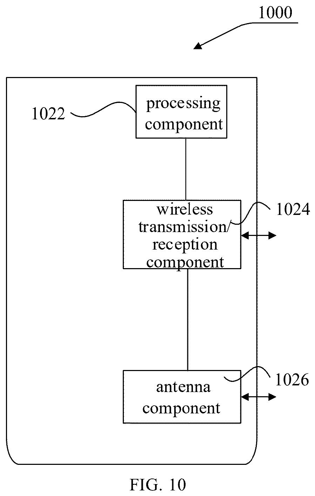

As shown in FIG. 10, FIG. 10 is a structure schematic diagram of an information transmission apparatus 1000 according to an example embodiment. The apparatus 1000 may be provided as a network device. Referring to FIG. 10, the apparatus 1000 includes a processing component 1022, a wireless transmission/reception component 1024, an antenna component 1026, and a signal processing part specific to a wireless interface, and the processing component 1022 may further include at least one processor.

One of the processors in the processing component 1022 may be configured to execute any of the information transmission methods described above for the network device.

Those skilled in the art will readily appreciate other embodiments of the present disclosure after considering the specification and practicing the present disclosure disclosed herein. The present disclosure is intended to cover any variations, uses or adaptations of the present disclosure, which follow the general principles of the present disclosure and include common knowledge or customary techniques in the art that are not disclosed in the present disclosure. The description and examples are intended to be exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. An information transmission method, performed by a terminal, comprising:
reporting related information of a network slice AS group (NSAG) to a network device in response to a random access (RA) triggered by a network slice.

2. The method according to claim 1, wherein the NSAG comprises at least one of:
all NSAGs associated with single-network slice selection assistance information (S-NSSAI) triggering the RA; or
an NSAG associated with S-NSSAI triggering the RA and meeting a specified condition.

3. The method according to claim 2, wherein the specified condition for the NSAG associated with the S-NSSAI triggering the RA and meeting the specified condition comprises at least one of:
the NSAG being comprised in a system message; or
the NSAG having a highest NSAG priority.

4. The method according to any one of claims 1 to 3, wherein the related information of the NSAG comprises at least one of:
S-NSSAI associated with the NSAG;
identity information of the NSAG;
priority information of the NSAG; or
area identity information corresponding to the NSAG, the area identity information comprising tracking area identity (TAI) information.

5. The method according to any one of claims 1 to 4, further comprising:
recording the related information of the NSAG.

6. The method according to claim 5, wherein recording the related information of the NSAG comprises at least one of:
recording the related information of the NSAG in response to triggering a specified record;
recording the related information of the NSAG in response to a random access failure; or
recording the related information of the NSAG in response to receiving recording instruction information sent by the network device.

7. The method according to claim 6, wherein triggering the specified record comprises at least one of:
triggering a radio link failure (RLF) record;
triggering an RA record; or
triggering a handover success record.

8. The method according to any one of claims 5 to 7, wherein recording the related information of the NSAG comprises:
recording the related information of the NSAG in a specified report variable.

9. The method according to claims 1-8, wherein reporting the related information of the NSAG triggering the RA to the network device comprises at least one of:
reporting availability indication information to the network device, wherein the availability indication information is used to indicate that the terminal has the related information of the NSAG; or
reporting content in the specified report variable to the network device.

10. The method according to claim 9, wherein the availability indication information comprises at least one of:
RLF availability indication information;
successful handover report (SHR) availability indication information;
RA availability indication information; or
newly-defined slice information availability indication information.

11. The method according to claim 8 or 9, wherein the specified report variable comprises at least one of:
an RLF report variable;
an SHR variable;
an RA report variable; or
a slice report variable used to record slice information.

12. The method according to any one of claims 1 to 11, further comprising:
receiving reporting request information sent by the network device, wherein the reporting request information is used to request the terminal to report the related information of the NSAG to the network device;
wherein reporting the related information of the NSAG triggering the RA to the network device comprises:
reporting the related information of the NSAG to the network device based on the reporting request information.

13. The method according to any one of claims 1 to 12, further comprising:
reporting capability indication information to the network device, wherein the capability indication information is used to indicate that the terminal has a capability to report the related information of the NSAG.

14. The method according to any one of claims 1 to 13, wherein the RA comprises at least one of:
a two-step RA; or
a four-step RA.

15. The method according to any one of claims 1 to 14, wherein the RA at least comprises a contention-based random access (CBRA).

16. An information transmission method, performed by a network device, comprising:
receiving related information of a network slice AS group (NSAG) reported by a terminal; and
optimizing random access (RA) resource configuration information corresponding to the NSAG based on the related information of the NSAG.

17. The method according to claim 16, wherein the NSAG comprises at least one of:
all NSAGs associated with single-network slice selection assistance information (S-NSSAI) triggering the RA; or
an NSAG associated with S-NSSAI triggering the RA and meeting a specified condition.

18. The method according to claim 17, wherein the specified condition for the NSAG associated with the S-NSSAI triggering the RA and meeting the specified condition comprises at least one of:
the NSAG being comprised in a system message; or
the NSAG having a highest NSAG priority.

19. The method according to any one of claims 16 to 18, wherein the related information of the NSAG comprises at least one of:
S-NSSAI associated with the NSAG;
identity information of the NSAG;
priority information of the NSAG; or
area identity information corresponding to the NSAG, the area identity information comprising tracking area identity (TAI) information.

20. The method according to any one of claims 16 to 19, further comprising:
sending recording instruction information to the terminal, wherein the recording instruction information is used to instruct the terminal to record the related information of the NSAG.

21. The method according to any one of claims 16 to 20, wherein receiving the related information of the NSAG reported by the terminal comprises at least one of:
receiving availability indication information reported by the terminal, wherein the availability indication information is used to indicate that the terminal has the related information of the NSAG; or
receiving a specified report variable reported by the terminal, wherein the related information of the NSAG is recorded in the specified report variable.

22. The method according to claim 21, wherein the availability indication information comprises at least one of:
radio link failure (RLF) availability indication information;
successful handover report (SHR) availability indication information;
RA availability indication information; or
newly-defined slice information availability indication information.

23. The method according to claim 21, wherein the specified report variable comprises at least one of:
an RLF report variable;
an SHR variable;
an RA report variable; or
a slice report variable used to record slice information.

24. The method according to any one of claims 16 to 23, further comprising:
sending reporting request information to the terminal, wherein the reporting request information is used to request the terminal to report the related information of the NSAG to the network device.

25. The method according to any one of claims 16 to 24, further comprising:
receiving capability indication information reported by the terminal, wherein the capability indication information is used to indicate that the terminal has a capability to report the related information of the NSAG.

26. The method according to any one of claims 16 to 25, wherein the RA comprises at least one of:
a two-step RA; or
a four-step RA.

27. The method according to any one of claims 16 to 26, wherein the RA at least comprises a contention-based random access (CBRA).

28. An information transmission apparatus, applied to a terminal, comprising:
a reporting module, configured to report related information of a network slice AS group (NSAG) to a network device in response to a random access (RA) triggered by a network slice.

29. An information transmission apparatus, applied to a base station, comprising:
a receiving module, configured to receive related information of a network slice AS group (NSAG) reported by a terminal; and
an optimization module, configured to optimize random access (RA) resource configuration information corresponding to the NSAG based on the related information of the NSAG.

30. A computer-readable storage medium, wherein the storage medium stores a computer program, and the computer program is used to execute the information transmission method according to any one of claims 1 to 15.

31. A computer-readable storage medium, wherein the storage medium stores a computer program, and the computer program is used to execute the information transmiss ion method described in any one of claims 16 to 27.

32. An information transmission apparatus, comprising:
a processor; and
a memory for storing instructions executable by the processor;
wherein the processor is configured to perform the information transmission method according to any one of claims 1 to 15.

33. An information transmission apparatus, comprising:
a processor; and
a memory for storing instructions executable by the processor;
wherein the processor is configured to perform the information transmission method according to any one of claims 16-27.
